(19) Europäisches Patentamt
European Patent Office
Office européen des brevets

(11) EP 3 910 016 A1

(12) **EUROPEAN PATENT APPLICATION**
published in accordance with Art. 153(4) EPC

(43) Date of publication:
**17.11.2021 Bulletin 2021/46**

(21) Application number: **20738911.5**

(22) Date of filing: **10.01.2020**

(51) Int Cl.:
***C08L 1/00*** *(2006.01)*
***C08K 5/05*** *(2006.01)*
***C08K 5/49*** *(2006.01)*
***C08L 101/00*** *(2006.01)*
***C08J 3/22*** *(2006.01)*
***C08K 5/13*** *(2006.01)*
***C08K 7/02*** *(2006.01)*

(86) International application number:
**PCT/JP2020/000735**

(87) International publication number:
**WO 2020/145398 (16.07.2020 Gazette 2020/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.01.2019 JP 2019003376**

(71) Applicant: **ADEKA CORPORATION**
**Arakawa-ku**
**Tokyo**
**116-8554 (JP)**

(72) Inventors:
- **ISHIMA Yosuke**
  **Saitama-shi, Saitama 336-0022 (JP)**
- **YAMAZAKI Mariko**
  **Saitama-shi, Saitama 336-0022 (JP)**

(74) Representative: **Gill Jennings & Every LLP**
**The Broadgate Tower**
**20 Primrose Street**
**London EC2A 2ES (GB)**

# (54) ADDITIVE COMPOSITION, THERMOPLASTIC RESIN COMPOSITION CONTAINING SAME, AND MOLDED ARTICLE OF SAID THERMOPLASTIC RESIN COMPOSITION

(57) Provided are: a cellulose nanofiber-containing additive composition which can inhibit coloring of a molded article under a high-temperature environment; a thermoplastic resin composition containing the same; and a molded article of the thermoplastic resin composition. The additive composition contains: (A) cellulose nanofibers; and (B) an alcohol compound having 4 to 60 carbon atoms (excluding a phenolic compound), and the content of the (B) alcohol compound having 4 to 60 carbon atoms is 0.01 to 100 parts by mass with respect to 100 parts by mass of the (A) cellulose nanofibers.



Printed by Jouve, 75001 PARIS (FR)

## Description

TECHNICAL FIELD

The present invention relates to an additive composition, a thermoplastic resin composition containing the same (hereinafter, also simply referred to as "resin composition"), and a molded article of the thermoplastic resin composition. More particularly, the present invention relates to: a cellulose nanofiber-containing additive composition which can inhibit coloring of a molded article under a high-temperature environment; a thermoplastic resin composition containing the same; and a molded article of the thermoplastic resin composition.

BACKGROUND ART

Cellulose nanofibers are a nano-material mainly composed of cellulose constituting the basic skeleton of plant cells, and can be obtained by fibrillating plant fibers to a nano-size. Characteristic features of cellulose nanofibers include having a strength of equal to or higher than that of steel even with a specific gravity of only one-fifth of steel, having a large specific surface area (250 $m^2/g$ or larger), and showing limited deformation when heated. In addition, cellulose nanofibers are a plant-derived sustainable resource and thus increasingly utilized as a fiber reinforcement material having a low environmental load.

For example, Patent Document 1 proposes a fiber-reinforced composite material which is obtained from a masterbatch containing a polyolefin, an antioxidant, a light stabilizer, and 40 to 50% by mass of cellulose nanofibers. Further, Patent Document 2 proposes an optical film which contains an antioxidant and cellulose nanofibers substituted with an acyl group having 1 to 5 carbon atoms. Moreover, Patent Document 3 proposes a cellulose nanofiber aqueous dispersion which contains: fine particles composed of a copolymer containing an olefin and an unsaturated carboxylic acid (salt) as essential constituent monomers; cellulose nanofibers; and an aqueous medium.

RELATED ART DOCUMENTS

PATENT DOCUMENTS

[Patent Document 1] JP6360954B1
[Patent Document 2] JP5929916B2
[Patent Document 3] JP2015-196790A

SUMMARY OF THE INVENTION

PROBLEMS TO BE SOLVED BY THE INVENTION

However, in a molded article of a polyolefin-based resin composition in which cellulose nanofibers are incorporated, it has been pointed out that although an excellent improvement effect is obtained in terms of rigidity, the molded article is discolored under a high-temperature environment. Patent Document 1 describes that the masterbatch is colored in black to brown due to deterioration of the cellulose nanofibers when kneading by a biaxial extruder is performed at a temperature of higher than 200°C, and conventional antioxidants thus do not have a satisfactory thermostabilization effect on a polyolefin-based resin composition containing cellulose nanofibers.

In addition, in the invention disclosed in Patent Document 2, a resin component other than cellulose nanofibers is not incorporated, and the effects of incorporating cellulose nanofibers into a polyolefin-based resin are not examined at all. Moreover, in the invention disclosed in Patent Document 3 which relates to an aqueous dispersion of cellulose nanofibers, an effect under a high-temperature environment is not examined.

In view of the above, an object of the present invention is to provide: a cellulose nanofiber-containing additive composition which can inhibit coloring of a molded article under a high-temperature environment; a thermoplastic resin composition containing the same; and a molded article of the thermoplastic resin composition.

MEANS FOR SOLVING THE PROBLEMS

The present inventors intensively studied to solve the above-described problems and consequently discovered that the problems can be solved by using a prescribed alcohol compound, thereby completing the present invention.

That is, an additive composition of the present invention contains: (A) cellulose nanofibers; and (B) an alcohol

compound having 4 to 60 carbon atoms (excluding a phenolic compound),

the additive composition being characterized in that the content of the (B) alcohol compound having 4 to 60 carbon atoms is 0.01 to 100 parts by mass with respect to 100 parts by mass of the (A) cellulose nanofibers.

The "phenolic compound" means a compound which contains a hydroxy group bound to an aromatic ring and has a structure of a hindered phenol, a semi-hindered phenol, or a less-hindered phenol. The "hindered phenol" is a compound having a structure represented by the following Formula (I), the "semi-hindered phenol" is a compound having a structure represented by the following Formula (II), and the "less-hindered phenol" is a compound having a structure represented by the following Formula (III).

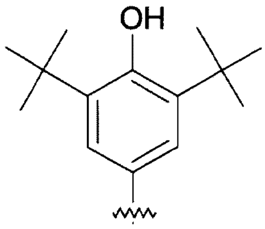
(I)

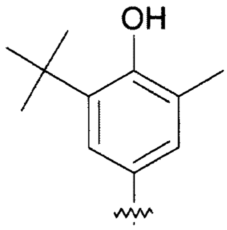
(II)

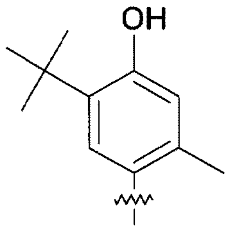
(III)

In the additive composition of the present invention, it is preferred that the (B) alcohol compound having 4 to 60 carbon atoms be at least one selected from the group consisting of linear or branched monohydric alcohols having 10 to 30 carbon atoms, linear or branched polyhydric alcohols having 10 to 30 carbon atoms, cyclic acetal-containing diols, tris(2-hydroxyalkyl)isocyanurates, and alcohols represented by the following Formula (1) or (2):

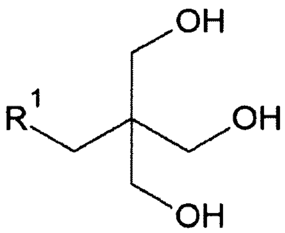
(1)

(wherein, $R^1$ represents a hydrogen atom, a hydroxy group, or a linear or branched alkyl group having 1 to 6 carbon atoms)

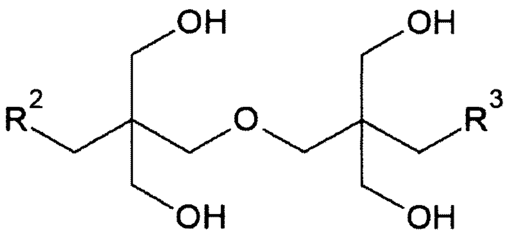
(2)

(wherein, $R^2$ and $R^3$ each independently represent a hydrogen atom, a hydroxy group, or a linear or branched alkyl group having 1 to 6 carbon atoms).

It is also preferred that the additive composition of the present invention further contain an antioxidant, and this antioxidant is preferably at least one selected from the group consisting of phenolic antioxidants and phosphorus-based antioxidants.

A thermoplastic resin composition of the present invention contains: (A) cellulose nanofibers; (B) an alcohol compound having 4 to 60 carbon atoms (excluding a phenolic compound); and (C) a thermoplastic resin,

the thermoplastic resin composition being characterized in that the content of the (B) alcohol compound having 4 to 60 carbon atoms is 0.01 to 100 parts by mass with respect to 100 parts by mass of the (A) cellulose nanofibers, and the content of the (A) cellulose nanofibers is 0.5 to 150 parts by mass with respect to 100 parts by mass of the (C) thermoplastic resin.

A molded article of the present invention is characterized by containing the thermoplastic resin composition of the present invention.

The molded article of the present invention can be preferably used as an automotive interior member, an automotive exterior member, a home appliance housing, a building member, or a structural material for sporting goods.

EFFECTS OF THE INVENTION

According to the present invention, the followings can be provided: a cellulose nanofiber-containing additive composition which can inhibit coloring of a molded article under a high-temperature environment; a thermoplastic resin composition containing the same; and a molded article of the thermoplastic resin composition.

MODE FOR CARRYING OUT THE INVENTION

Embodiments of the present invention will now be described in detail.

The additive composition of the present invention contains (A) cellulose nanofibers (hereinafter, also referred to as "component (A)") and (B) an alcohol compound having 4 to 60 carbon atoms (hereinafter, also referred to as "component (B)"). It is noted here that, in the additive composition of the present invention, a phenolic compound is not included in the component (B). In the additive composition of the present invention, the content of the component (B) is 0.01 to 100 parts by mass with respect to 100 parts by mass of the component (A). By using the additive composition of the present invention, coloring of a molded article composed of a thermoplastic resin composition can be inhibited under a high-temperature environment.

In the additive composition of the present invention, the component (A) is a nano-material mainly composed of cellulose constituting the plant basic skeleton, and is generally an ultrafine fiber-form substance having an average fiber width of 1 nm to several hundred nanometers and a length of several hundred nanometers to several ten micrometers. The cellulose nanofibers can be obtained by, for example, mechanical fibrillation or partial chemical fibrillation of a cellulose material.

Examples of the cellulose material include cellulose fibers and the like that are derived from plant materials (e.g., wood, bamboo, hemp, jute, kenaf, agricultural waste, cloth, pulp (needle unbleached kraft pulp (NUKP), needle bleached kraft pulp (NBKP), leaf unbleached kraft pulp (LUKP), leaf bleached kraft pulp (LBKP), needle unbleached sulfite pulp (NUSP), needle bleached sulfite pulp (NBSP), thermomechanical pulp (TMP), recycled pulp, waste paper, etc.), animal materials (e.g., Ascidiacea), algae, microorganisms (e.g., *Acetobacter*), microbial products and the like. In the additive composition of the present invention, the cellulose material is preferably a plant-derived cellulose fiber.

In the additive composition of the present invention, the component (A) may be obtained by fibrillating a cellulose material that has been subjected to a chemical treatment (cationization, carboxylation (oxidation), carboxymethylation, or anionization such as esterification: introduction of functional groups).

An apparatus used for fibrillating the cellulose material is not particularly restricted and, for example, a high-speed rotary-type, colloid mill-type, high pressure-type, roll mill-type apparatus, or an ultrasonic-type apparatus can be used. For the fibrillation, it is preferred to perform a physical fibrillation treatment by which a strong shear force can be applied to an aqueous dispersion of the cellulose material. In addition, prior to the fibrillation treatment, a pretreatment may be performed on the aqueous dispersion using an apparatus for mixing, stirring, emulsification, and/or dispersion.

In the additive composition of the present invention, the average fiber diameter of the cellulose nanofibers is preferably 2 to 500 nm, more preferably 2 to 50 nm, in terms of length-weighted average fiber diameter. The average fiber length is preferably 50 to 2,000 nm, more preferably 100 to 1,000 nm, in terms of length-weighted average fiber length. The length-weighted average fiber diameter and the length-weighted average fiber length can be determined by observing each fiber under an atomic force microscope (AFM) or a transmission electron microscope (TEM).

In the additive composition of the present invention, the average aspect ratio of the cellulose nanofibers is preferably 10 or higher, more preferably 50 or higher. An upper limit of the average aspect ratio of the cellulose nanofibers is not particularly restricted; however, it is usually 1,000 or lower. The average aspect ratio of the cellulose nanofibers can be calculated using the following equation:

$$\text{Average aspect ratio} = \text{Average fiber length}/\text{Average fiber diameter}$$

The additive composition of the present invention may also contain a dispersion medium for the purpose of uniformly dispersing the cellulose nanofibers in a thermoplastic resin. When the cellulose nanofibers are not hydrophobized, the dispersion medium preferably contains a hydrophilic substance or water as a main component. The hydrophilic substance is preferably a polar substance that does not dissolve the thermoplastic resin. Examples of the hydrophilic substance include methanol, ethanol, isopropyl alcohol, and acetone. These hydrophilic substances may be used individually, or two or more thereof may be used in combination. Further, the water may be any of tap water, industrial water, distilled water, purified water and the like.

Next, the (B) alcohol compound having 4 to 60 carbon atoms will be described. In the additive composition of the present invention, the component (B) is an alcohol compound other than a phenolic compound. The component (B) may be any of aliphatic alcohols, aromatic alcohols, hydroxy acid compounds and the like, and the component (B) may be, for example, a monohydric alcohol, a polyhydric alcohol, or an unsaturated alcohol. In the component (B), a hydrogen atom of a carbon chain is optionally substituted with an alkyl group, an alkoxy group, a halogen atom, or a combination thereof, and the carbon chain contained in the component (B) may be branched and/or interrupted by an oxygen atom, a sulfur atom, an unsaturated bond or an ester group, and may have an alicyclic group structure such as cyclopentyl, cyclohexyl, or cycloheptyl.

Examples of the component (B) in the additive composition of the present invention include: linear aliphatic alcohols, such as butyl alcohol, pentanol, hexanol, 1,4-butanediol, and 1,3-butanediol; branched aliphatic alcohols, such as isobutyl alcohol and neopentyl alcohol; aliphatic alcohols interrupted by an ether bond, such as ethoxyethanol, butoxyethanol, 1-methylpropoxyethanol, 2-methylbutoxyethanol, butoxypropanol (n-BP), and butoxypropoxypropanol (n-BPP); alicyclic group-containing aliphatic polyols, such as cyclodextrin, 2-(5-ethyl-5-hydroxymethyl-1,3-dioxan-2-yl)-2-methylpropan-1-ol, 3,9-bis(2-hydroxy-1,1-dimethylethyl)-2,4,8,10-tetraoxaspiro[5.5]undecane, cyclobutanediol, cyclopentanediol, cyclohexanediol, cycloheptanediol, cyclooctanediol, cyclohexane dimethanol, tricyclohexane dimethanol, tricyclodecane dimethanol, hydroxypropylcyclohexanol, tricyclo[5,2,1,0,2,6]decane-dimethanol, bicyclo[4,3,0]-nonanediol, dicyclohexanediol, tricyclo[5,3,1,1]dodecanediol, bicyclo[4,3,0]nonane-dimethanol, tricyclo[5,3,1,1]dodecane-diethanol, hydroxypropyltricyclo[5,3,1,1]dodecanol, spiro[3,4]octanediol, butylcyclohexanediol, 1,1'-bicyclohexylidenediol, and cyclohexane triol; pentaerythritol compounds, such as pentaerythritol, dipentaerythritol, tripentaerythritol, and tetrapentaerythritol; cyclic acetal-containing diol compounds, such as 2-(5-ethyl-5-hydroxymethyl-1,3-dioxan-2-yl)-2-methylpropan-1-ol and 3,9-bis(2-hydroxy-1,1-dimethylethyl)-2,4,8,10-tetraoxaspiro[5.5]undecane (common name: spiroglycol); sugar alcohols, such as erythritol, isomalt, lactitol, maltitol, mannitol, sorbitol, xylitol, and sucrose; aromatic alcohols, such as benzyl alcohol, phenethyl alcohol, 2-ethylbenzyl alcohol, methoxyphenyl methanol, 1-(4-hydroxyphenyl)pentadecane-1,3-dione, cyclohexane diethanol dihydroxybenzene, benzenetriol, hydroxybenzyl alcohol, and dihydroxytoluene; and aliphatic alcohols, such as 4,4'-isopropylidene-bis-cyclohexanol, 4,4'-oxybis-cyclohexanol, 4,4'-thiobis-cyclohexanol, and bis(4-hydroxycyclohexanol)methane. These compounds may be used individually, or two or more thereof may be used in combination.

In the additive composition of the present invention, the component (B) is preferably at least one selected from the group consisting of linear or branched monohydric alcohols having 10 to 30 carbon atoms, linear or branched polyhydric alcohols having 10 to 30 carbon atoms, cyclic acetal-containing diols, tris(2-hydroxyalkyl)isocyanurates, and alcohols represented by the following Formula (1) or (2). By using any of these alcohol compounds, the effects of the present invention are further enhanced.

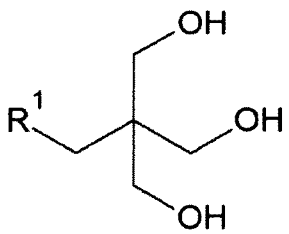

(1)

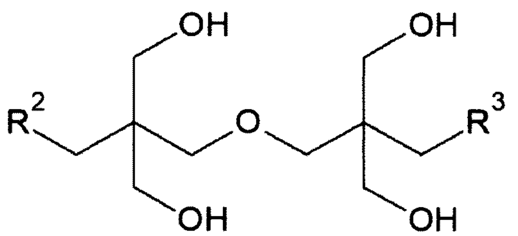

(2)

In Formula (1), $R^1$ represents a hydrogen atom, a hydroxy group, or a linear or branched alkyl group having 1 to 6 carbon atoms. In Formula (2), $R^2$ and $R^3$ each represent a hydrogen atom, a hydroxy group, or a linear or branched alkyl group having 1 to 6 carbon atoms.

Examples of the alkyl group having 1 to 6 carbon atoms that is represented by $R^1$, $R^2$ and $R^3$ in Formulae (1) and (2) include methyl, ethyl, propyl, isopropyl, butyl, *sec*-butyl, *tert*-butyl, isobutyl, amyl, isoamyl, *tert*-amyl, hexyl, and cyclohexyl.

Specific examples of the linear or branched monohydric alcohols having 10 to 30 carbon atoms include 1-decanol, lauryl alcohol, myristyl alcohol, palmityl alcohol, stearyl alcohol, arachidyl alcohol, behenyl alcohol, lignoceryl alcohol, and myricyl alcohol. Thereamong, lauryl alcohol, myristyl alcohol, palmityl alcohol, stearyl alcohol, arachidyl alcohol, and behenyl alcohol are preferred; myristyl alcohol, palmityl alcohol, stearyl alcohol, and arachidyl alcohol are more preferred; and stearyl alcohol is particularly preferred.

Specific examples of the linear or branched polyhydric alcohols having 10 to 30 carbon atoms include 1,2-decanediol, 1,10-decanediol, 1,2-dodecanediol, 1,12-dodecanediol, 1,2-tetradecanediol, 1,14-tetradecanediol, 1,2-hexadecanediol, 1,16-hexadecanediol, 1,2-octadecanediol, 1,18-octadecanediol, 1,2-eicosanediol, 1,20-eicosanediol, 1,2-tetracosanediol, 1,24-tetracosanediol, 1,2-triacontanediol, and 1,30-triacontanediol. Thereamong, 1,2-decanediol, 1,10-decanediol, 1,2-dodecanediol, 1,12-dodecanediol, 1,2-tetradecanediol, 1,14-tetradecanediol, 1,2-hexadecanediol, 1,16-hexadecanediol, 1,2-octadecanediol, and 1,18-octadecanediol are preferred; 1,2-decanediol, 1,2-dodecanediol, 1,2-tetradecanediol, 1,2-hexadecanediol, and 1,2-octadecanediol are more preferred; 1,2-decanediol, 1,2-dodecanediol, and 1,2-tetradecanediol are still more preferred; and 1,2-dodecanediol is particularly preferred.

Specific examples of the cyclic acetal-containing diols include 2-(5-ethyl-5-hydroxymethyl-1,3-dioxan-2-yl)-2-methylpropane-1-ol, 3,9-bis(2-hydroxy-1,1-dimethylethyl)-2,4,8,10-tetraoxaspiro[5.5]undecane (common name: spiroglycol), and 3,9-diethanol-2,4,8,10-tetraoxaspiro[5.5]undecane. Thereamong, spiroglycol is particularly preferred.

Specific examples of the tris(2-hydroxyalkyl)isocyanurates include tris(2-hydroxymethyl)isocyanurate, tris(2-hydroxyethyl)isocyanurate, and tris(2-hydroxypropyl)isocyanurate. Thereamong, tris(2-hydroxyethyl)isocyanurate is particularly preferred.

Specific examples of the alcohols represented by Formula (1) include trimethylolethane, trimethylolpropane, trimethylolbutane, trimethylolpentane, trimethylolhexane, trimethylolhexane, trimethyloloctane, and pentaerythritol. Thereamong, trimethylolethane, trimethylolpropane, and pentaerythritol are preferred, and pentaerythritol is particularly preferred.

Specific examples of the alcohols represented by Formula (2) include ditrimethylolethane, ditrimethylolpropane, ditrimethylolbutane, ditrimethylolpentane, ditrimethylolhexane, ditrimethylolhexane, ditrimethyloloctane, and dipentaerythritol. Thereamong, ditrimethylolethane, ditrimethylolpropane, and dipentaerythritol are preferred, and ditrimethylolpropane and dipentaerythritol are more preferred.

In the additive composition of the present invention, the content of the component (B) is 0.01 to 100 parts by mass, preferably 0.1 to 100 parts by mass, more preferably 0.5 to 80 parts by mass, with respect to 100 parts by mass of the component (A).

The additive composition of the present invention preferably further contains an antioxidant. Examples of the antioxidant include phenolic antioxidants, phosphorus-based antioxidants, and sulfur-based antioxidants. In the additive composition of the present invention, the antioxidant is preferably at least one selected from the group consisting of phenolic antioxidants and phosphorus-based antioxidants.

Examples of the phenolic antioxidants include 2,6-di-*tert*-butyl-4-ethylphenol, 2-*tert*-butyl-4,6-dimethylphenol, styrenated phenol, 2,2'-methylene-bis(4-ethyl-6-*tert*-butylphenol), 2,2'-thiobis-(6-*tert*-butyl-4-methylphenol),2,2'-thiodiethylene-bis[3-(3,5-di-*tert*-butyl-4-hydroxyphenyl)propionate], 2-methyl-4,6-bis(octylsulfanylmethyl)phenol, 2,2'-isobutylidene-bis(4,6-dimethylphenol), isooctyl-3-(3,5-di-*tert*-butyl-4-hydroxyphenyl)propionate, *N*,*N'*-hexane-1,6-diylbis[3-(3,5-di-*tert*-butyl-4-hydroxyphenyl)propionamide], 2,2'-oxamide-bis[ethyl-3-(3,5-di-*tert*-butyl-4-hydroxyphenyl)propionate], 2-ethylhexyl-3-(3',5'-di-*tert*-butyl-4'-hydroxyphenyl)propionate, 2,2'-ethylene-bis(4,6-di-*tert*-butylphenol), esters of 3,5-di-*tert*-butyl-4-hydroxy-benzenepropanoic acid and a C13-15 alkyl, 2,5-di-*tert*-amylhydroquinone, hindered phenol polymers (e.g., trade name "AO.OH.98" manufactured by ADEKA Polymer Additives Europe SAS), 2,2'-methylene-bis[6-(1-methylcyclohexyl)-*p*-cresol], 2-*tert*-butyl-6-(3-*tert*-butyl-2-hydroxy-5-methylbenzyl)-4-methylphenyl acrylate, 2-[1-(2-hydroxy-3,5-di-*tert*-pentylphenyl)ethyl]-4,6-di-*tert*-pentylphenyl acrylate, 6-[3-(3-*tert*-butyl-4-hydroxy-5-methyl)propoxy]-2,4,8,10-tetra-*tert*-butylbenzo[*d*,*f*][1,3,2]-dioxaphosphepin, hexamethylene-bis[3-(3,5-di-*tert*-butyl-4-hydroxyphenyl)propionate, calcium bis[monoethyl(3,5-di-*tert*-butyl-4-hydroxybenzyl)phosphonate], a reaction product between 5,7-bis(1,1-dimethylethyl)-3-hydroxy-2(3*H*)-benzofuranone and o-xylene, 2,6-di-*tert*-butyl-4-(4,6-bis(octylthio)-1,3,5-triazine-2-ylamino)phenol, DL-*a*-tocophenol (vitamin E), 2,6-bis($\alpha$-methylbenzyl)-4-methylphenol, bis[3,3-bis-(4'-hydroxy-3'-*tert*-butylphenyl)butyric acid]glycol ester, 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-tert-butyl-4-hydroxybenzyl)phosphonate, tridecyl-3,5-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(2,6-di-*tert*-butylphenol), 4,4'-butylidene-bis(6-*tert*-butyl-3-methylphenol), 2,2'-ethylidene-bis(4,6-di-tert-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-tetraoxaspiro[5.5]undecane, triethylene glycol-bis[$\beta$-(3-*tert*-butyl-4-hydroxy-5-methylphenyl)propionate], and 3-(3,5-dialkyl-4-hydroxyphenyl)propionic acid derivatives, such as stearyl-3-(3,5-di-*tert*-butyl-4-hydroxyphenyl)propionic acid amide, palmityl-3-(3,5-di-*tert*-butyl-4-hydroxyphenyl)propionic acid amide, myristyl-3-(3,5-di-*tert*-butyl-4-hydroxyphenyl)propionic acid amide, and lauryl-3-(3,5-di-*tert*-butyl-4-hydroxyphenyl)propionic acid amide. When a phenolic antioxidant is incorporated, the amount thereof is adjusted to be preferably 0.001 to 5 parts by mass, more preferably 0.03 to 3 parts by mass, with respect to 100 parts by mass of the thermoplastic resin.

Examples of the phosphorus-based antioxidants include triphenyl phosphite, diisooctyl phosphite, heptakis(dipropylene glycol)triphosphite, triisodecyl phosphite, diphenylisooctyl phosphite, diisooctylphenyl phosphite, diphenyltridecyl phosphite, triisooctyl phosphite, trilauryl phosphite, diphenyl phosphite, tris(dipropylene glycol)phosphite, dioleyl hydrogen phosphite, trilauryl trithiophosphite, bis(tridecyl)phosphite, tris(isodecyl)phosphite, tris(tridecyl)phosphite, diphenyldecyl phosphite, dinonylphenyl-bis(nonylphenyl)phosphite, poly(dipropylene glycol)phenyl phosphite, tetraphenyldipropyl glycol diphosphite, trisnonylphenyl phosphite, tris(2,4-di-*tert*-butylphenyl)phosphite, tris(2,4-di-*tert*-butyl-5-methylphenyl)phosphite, tris[2-*tert*-butyl-4-(3-*tert*-butyl-4-hydroxy-5-methylphenylthio)-5-methylphenyl]phosphite, tri(decyl) phosphite, octyldiphenyl phosphite, di(decyl)monophenyl phosphite, mixtures of distearyl pentaerythritol and calcium stearate, alkyl(C10) bisphenol-A phosphite, tetraphenyl-tetra(tridecyl)pentaerythritol tetraphosphite, bis(2,4-di-*tert*-butyl-6-methylphenyl)ethyl phosphite, tetra(tridecyl)isopropylidene diphenol diphosphite, tetra(tridecyl)-4,4'-*n*-butylidene-bis(2-*tert*-butyl-5-methylphenol)diphosphite, hexa(tridecyl)-1,1,3-tris(2-methyl-4-hydroxy-5-tert-butylphenyl)butane triphosphite, tetrakis(2,4-di-*tert*-butylphenyl)biphenylene diphosphonite, 9,10-dihydro-9-oxa-10-phosphaphenanthrene-10-oxide, (1-methyl-1-propanyl-3-ylidene)tris(1,1-dimethylethyl)-5-methyl-4,1-phenylene)hexatridecyl phosphite, 2,2'-methylene-bis(4,6-*tert*-butylphenyl)-2-ethylhexyl phosphite, 2,2'-methylene-bis(4,6-di-*tert*-butylphenyl)-octadecyl phosphite, 2,2'-ethylidene-bis(4,6-di-*tert*-butylphenyl)fluorophosphite, 4,4'-butylidene-bis(3-methyl-6-*tert*-butylphenylditridecyl)phosphite, tris(2-[(2,4,8,10-tetrakis-*tert*-butyldibenzo[*d*,*f*][1,3,2]dioxaphosphepin-6-yl)oxy]ethyl)amine, 3,9-bis(4-nonylphenoxy)-2,4,8,10-tetraoxa-3,9-diphosphaspiro[5.5]undecane, 2,4,6-tri-tert-butylphenyl-2-butyl-2-ethyl-1,3-propanediol phosphite, poly-4,4'-isopropylidene diphenol C12-15 alcohol phosphite, bis(diisodecyl)pentaerythritol diphosphite, bis(tridecyl)pentaerythritol diphosphite, bis(octadecyl)pentaerythritol diphosphite, bis(nonylphenyl)pentaerythritol diphosphite, bis(2,4-di-*tert*-butylphenyl)pentaerythritol diphosphite, bis(2,4,6-tri-*tert*-butylphenyl)pentaerythritol diphosphite, bis(2,6-di-tert-butyl-4-methylphenyl)pentaerythritol diphosphite, and bis(2,4-dicumylphenyl)pentaerythritol diphosphite. When a phosphorus-based antioxidant is incorporated, the amount thereof is adjusted to be preferably 0.001 to 10 parts by mass, more preferably 0.01 to 0.5 parts by mass, with respect to 100 parts by mass of the thermoplastic resin.

Examples of the sulfur-based antioxidants include tetrakis[methylene-3-(laurylthio)propionate]methane, bis(methyl-4-[3-*n*-alkyl(C12/C14)thiopropionyloxy]-5-*tert*-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-*tert*-butyl-*m*-cresol), 2,2'-thiobis(6-*tert*-butyl-p-cresol), distearyl disulfide, 2-mercaptobenzimidazole, 2-mercaptomethyl benzimidazole, ditetradecyl thiodipropionate, dioctadecyl thiodipropionate, pentaerythritol tetrakis(3-dodecylthiopropionate), and pentaerythritol tetrakis(3-laurylthiopropionate). When a sulfur-based antioxidant is incorporated, the amount thereof is adjusted to be preferably 0.001 to 10 parts by mass, more preferably 0.01 to 0.5 parts by mass, with respect to 100 parts by mass of the thermoplastic resin.

In the additive composition of the present invention, as long as the effects thereof or the performance of the resin composition to be obtained are not greatly deteriorated, other additive(s) may be incorporated in addition to the above-described antioxidant. Examples of the other additives include those that are generally used in thermoplastic resins, such as a hindered amine compound, an ultraviolet absorber, a nucleating agent, a flame retardant, a flame retardant aid, a lubricant, a filler other than cellulose nanofibers, a hydrotalcite, a fatty acid metal salt, an antistatic agent, a pigment, and a dye. These other additives can be used with no particular restriction in terms of the amount to be incorporated; however, the other additives are preferably incorporated such that they exist at an appropriate concentration as the additive composition of the present invention in the thermoplastic resin.

Examples of the ultraviolet absorber include 2-hydroxybenzophenones, such as 2,4-dihydroxybenzophenone and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene-bis(4-*tert*-octyl-6-benzotriazolyl phenol), polyethylene glycol esters of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert*-butylphenyl]benzotriazole, 2-[2-hydroxy-3-(2-methacryloyloxyethyl)-5-*tert*-octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates, such as phenyl salicylate, resorcinol monobenzoate, 2,4-di-*tert*-butylphenyl-3,5-di-*tert*-butyl-4-hydroxybenzoate, octyl(3,5-di-*tert*-butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate, and behenyl(3,5-di-*tert*-butyl-4-hydroxy)benzoate; substituted oxanilides, such as 2-ethyl-2'-ethoxyoxanilide and 2-ethoxy-4'-dodecyloxanilide; cyanoacrylates, such as ethyl-$\alpha$-cyano-$\beta,\beta$-diphenyl acrylate and methyl-2-cyano-3-methyl-3-(p-methoxyphenyl)acrylate; triazines, such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecane dioate; and a variety of metal salts and metal chelates, particularly salts and chelates of nickel and chromium. When an ultraviolet absorber is incorporated, the amount thereof is adjusted to be preferably 0.001 to 10 parts by mass, more preferably 0.01 to 0.5 parts by mass, with respect to 100 parts by mass of the thermoplastic resin.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)-di(tridecyl)-1,2,3,4-butanetetracarboxylate, bis(1,2,2,4,4-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-*tert*-octylamino-*s*-triazine polycondensate, 1,5,8,12-tetrakis[2,4-bis(*N*-butyl-*N*-(2,2,6,6-tetramethyl-4-piperidyl)amino)-*s*-triazine-6-yl]-1,5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl]-1,5,8,12-tetraazadodecane, 1,6,11-tris[2,4-bis(*N*-butyl-*N*-(2,2,6,6-tetramethyl-4-piperidyl)amino)-*s*-triazine-6-yl]aminoundecane, 1,6,11-tris[2,4-bis(*N*-butyl-*N*-(1,2,2,6,6-pentamethyl-4-piperidyl)amino)-*s*-triazine-6-yl]aminoundecane, bis{4-(1-octyloxy-2,2,6,6-tetramethyl)piperidyl}decanedionate, and bis{4-(2,2,6,6-tetramethyl-1-undecyloxy)piperidyl)carbonate. When a hindered amine compound is incorporated, the amount thereof is adjusted to be preferably 0.001 to 10 parts by mass, more preferably 0.01 to 0.5 parts by mass, with respect to 100 parts by mass of the thermoplastic resin.

Examples of the nucleating agent include: metal carboxylates, such as sodium-2,2'-methylene-bis(4,6-di-*tert*-butylphenyl)phosphate, lithium-2,2'-methylene-bis(4,6-di-*tert*-butylphenyl)phosphate, aluminum hydroxybis[2,2'-methylene-bis(4,6-di-*tert*-butylphenyl)phosphate], sodium benzoate, 4-*tert*-butylbenzoate aluminum salt, sodium adipate, and 2-sodium-bicyclo[2.2.1]heptane-2,3-dicarboxylate; polyol derivatives, such as dibenzylidene sorbitol, bis(methylbenzylidene)sorbitol, bis(3,4-dimethylbenzylidene)sorbitol, bis(p-ethylbenzylidene)sorbitol, bis(dimethylbenzylidene)sorbitol, and 1,2,3-trideoxy-4,6:5,7-bis-O-((4-propylphenyl)methylene)nonitol; and amide compounds, such as *N*,*N*',*N*"-tris[2-methylcyclohexyl]-1,2,3-propane tricarboxamide, *N*,*N*',*N*"-tricyclohexyl-1,3,5-benzene tricarboxamide, *N*,*N*'-dicyclohexylnaphthalene dicarboxamide, and 1,3,5-tri(dimethylisopropoylamino)benzene. When a nucleating agent is incorporated, the amount thereof is adjusted to be preferably 0.001 to 10 parts by mass, more preferably 0.01 to 5 parts by mass, with respect to 100 parts by mass of the thermoplastic resin.

Examples of the flame retardant include: aromatic phosphates, such as triphenyl phosphate, tricresyl phosphate, trixylenyl phosphate, cresyldiphenyl phosphate, cresyl-2,6-dixylenyl phosphate, resorcinol-bis(diphenylphosphate), (1-methylethylidene)-4,1-phenylene tetraphenyldiphosphate, and 1,3-phenylene-tetrakis(2,6-dimethylphenyl)phosphate, as well as "ADK STAB FP-500", "ADK STAB FP-600" and "ADK STAB FP-800" (trade names, manufactured by ADEKA Corporation); phosphonates, such as divinyl phenylphosphonate, diallyl phenylphosphonate, and (1-butenyl) phenylphosphonate; phosphinates, such as phenyl diphenylphosphinate, methyl diphenylphosphinate, and 9,10-dihydro-9-oxa-10-phosphaphenanthlene-10-oxide derivatives; phosphazene compounds, such as bis(2-allylphenoxy)phosphazene and dicresyl phosphazene; phosphorus-based flame retardants, such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds, and red phosphorus; metal hydroxides, such as magnesium hydroxide and aluminum hydroxide; and bromine-based flame retardants, such as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These flame retardants are preferably used in combination with a drip inhibitor such as a fluorocarbon resin, and/or a flame retardant aid such as a polyhydric alcohol or hydrotalcite. When a flame retardant is incorporated, the amount thereof is adjusted to be preferably 1 to 100 parts by mass, more preferably 10 to 70 parts

by mass, with respect to 100 parts by mass of the thermoplastic resin.

The lubricant is added for the purposes of imparting the surface of the resulting molded article with lubricity and improving the damage-preventing effect. Examples of the lubricant include: unsaturated fatty acid amides, such as oleic acid amide and erucic acid amide; saturated fatty acid amides, such as behenic acid amide and stearic acid amide; butyl stearate; stearyl alcohol; stearic acid monoglyceride; sorbitan monopalmitate; sorbitan monostearate; mannitol; stearic acid; hardened castor oil; stearic acid amide; oleic acid amide; and ethylene-bis stearic acid amide. These lubricants may be used individually, or two or more thereof may be used in combination. When a lubricant is incorporated, the amount thereof is adjusted to be preferably 0.01 to 2 parts by mass, more preferably 0.03 to 0.5 parts by mass, with respect to 100 parts by mass of the thermoplastic resin.

Examples of the filler other than cellulose nanofibers include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, silica, alumina, potassium titanate whiskers, wollastonite, fibrous magnesium oxysulfate, carbon fibers, boron fibers, asbestos fibers, polyvinyl alcohol fibers, polyester fibers, acrylic fibers, aromatic polyamide fibers, polybenzoxazole fibers, polytetrafluoroethylene fibers, high-strength polyethylene fibers, alumina fibers, silicon carbide fibers, potassium titanate fibers, brass fibers, stainless-steel fibers, steel fibers and ceramic fibers, and any of these fillers can be used by appropriately selecting the particle size (the fiber diameter, the fiber length, and the aspect ratio in the case of a fibrous filler). Further, the filler to be used may be subjected to a surface treatment as required. As a surface treatment agent, for example, a vinylsilane-based, acrylsilane-based, ureidosilane-based, epoxysilane-based, or aminosilane-based silane coupling agent can be used. When a filler other than cellulose nanofibers is incorporated, the amount thereof is adjusted to be preferably 0.01 to 80 parts by mass, more preferably 1 to 50 parts by mass, with respect to 100 parts by mass of the thermoplastic resin.

The above-described hydrotalcite is a complex salt compound which is known as a natural or synthetic product and composed of magnesium, aluminum, hydroxy groups, a carbonate group and arbitrary crystal water, and examples thereof include hydrotalcites in which some of the magnesium or aluminum atoms are substituted with other metal such as an alkali metal or zinc; and hydrotalcites in which the hydroxy group(s) and/or carbonate group is/are substituted with other anionic group(s), specifically hydrotalcites represented by the following Formula (3) in which a metal is substituted with an alkali metal. In addition, as an Al-Li hydrotalcite, a compound represented by the following Formula (4) can be used as well.

$$\mathbf{Mg_{x1}Zn_{x2}Al_2(OH)_{2(x1+x2)+4}(CO_3)pH_2O} \qquad (3)$$

wherein, x1 and x2 each represent a number that satisfies the conditions represented by the following equations, and p represents 0 or a positive number: $0 \leq x2/x1 < 10$, $2 \leq (x1 + x2) \leq 20$.

$$\mathbf{[Li_{1/3}Al_{2/3}(OH)_2] \cdot [A^{q-}{}_{1/3q} \cdot pH_2O]} \qquad (4)$$

wherein, $A^{q-}$ represents a q-valent anion, and p represents 0 or a positive number.

Further, the carbonate anions in these hydrotalcites may be partially substituted with other anions.

In these hydrotalcites, the crystal water may be dehydrated, and the hydrotalcites may be coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester, or a wax.

The hydrotalcites may be naturally-occurring or synthetic hydrotalcites. Examples of a synthesis method thereof include known methods that are described in JPS46-2280B1, JPS50-30039B1, JPS51-29129B1, JPH03-36839B2, JPS61-174270A, JPH05-179052A, and the like. Further, the above-exemplified hydrotalcites can be used without any restriction in terms of their crystal structures, crystal particles and the like. When a hydrotalcite is incorporated, the amount thereof is adjusted to be preferably 0.001 to 5 parts by mass, more preferably 0.01 to 3 parts by mass, with respect to 100 parts by mass of the thermoplastic resin.

The fatty acid metal salt is preferably a compound represented by the following Formula (5) from the standpoint of attaining heat resistance and dispersion effect of the nucleating agent in a resin.

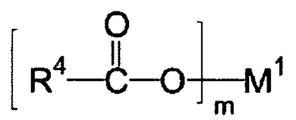

(5)

In Formula (5), $R^4$ represents a linear or branched aliphatic residue having 12 to 20 carbon atoms, and this aliphatic residue is optionally substituted with a hydroxy group. $M^1$ represents a monovalent to trivalent metal atom which is optionally bound with a hydroxy group, and m represents an integer of 1 to 3.

In Formula (5), specific examples of $M^1$ include sodium, potassium, lithium, calcium, zinc, barium, magnesium and hydroxyaluminum, and $M^1$ is particularly preferably sodium, lithium, or potassium.

When a fatty acid metal salt is incorporated, the amount thereof is adjusted to be preferably 0.01 to 5 parts by mass, more preferably 0.03 to 0.08 parts by mass, with respect to 100 parts by mass of the thermoplastic resin.

Examples of the above-described antistatic agent include low-molecular-weight antistatic agents based on nonionic, anionic, cationic or amphoteric surfactants, and high-molecular-weight antistatic agents based on polymer compounds.

Examples of the nonionic surfactants include: polyethylene glycol-type nonionic surfactants, such as higher alcohol ethylene oxide adducts, fatty acid ethylene oxide adducts, higher alkylamine ethylene oxide adducts, and polypropylene glycol ethylene oxide adducts; and polyhydric alcohol-type nonionic surfactants, such as polyethylene oxides, glycerin fatty acid esters, pentaerythritol fatty acid esters, sorbitol or sorbitan fatty acid esters, polyhydric alcohol alkyl ethers, and alkanolamine aliphatic amides.

Examples of the anionic surfactants include: carboxylates, such as alkali metal salts of higher fatty acids; sulfates, such as higher alcohol sulfates and higher alkyl ether sulfates; sulfonates, such as alkylbenzenesulfonates, alkyl sulfonates, and paraffin sulfonates; and phosphates, such as higher alcohol phosphates.

Examples of the cationic surfactants include quaternary ammonium salts such as alkyltrimethyl ammonium salts.

Examples of the amphoteric surfactants include: amino acid-type amphoteric surfactants, such as higher alkylaminopropionates; and betaine-type amphoteric surfactants, such as higher alkyl dimethylbetaines and higher alkyl dihydroxyethylbetaines.

In the additive composition of the present invention, an anionic surfactant is preferred, and a sulfonate such as an alkylbenzenesulfonate, an alkylsulfonate, or a paraffin sulfonate is particularly preferred. When a low-molecular-weight antistatic agent is incorporated, the amount thereof is adjusted to be preferably 0.1 to 10 parts by mass, more preferably 0.5 to 5 parts by mass, with respect to 100 parts by mass of the thermoplastic resin. Examples of the high-molecular-weight antistatic agents include ionomers, and block polymers containing a polyethylene glycol as a hydrophilic moiety. Examples of the ionomers include the ionomer disclosed in JP2010-132927A. Examples of the polymers containing a polyethylene glycol as a hydrophilic moiety include the polyether ester amide disclosed in JPH07-10989A, the polymer disclosed in US6552131B1 which is composed of a polyolefin and a polyethylene glycol, and the polymer disclosed in JP2016-023254A which is composed of a polyester and a polyethylene glycol. When a high-molecular-weight antistatic agent is incorporated, the amount thereof is adjusted to be preferably 3 to 60 parts by mass, more preferably 5 to 25 parts by mass, still more preferably 7 to 20 parts by mass, with respect to 100 parts by mass of the thermoplastic resin.

As the above-described pigment, a commercially available pigment can be used, and examples thereof include PIGMENT RED 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; PIGMENT ORANGE 13, 31, 34, 36, 38, 43, 46, 48, 49, 51, 52, 55, 59, 60, 61, 62, 64, 65, and 71; PIGMENT YELLOW 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; PIGMENT GREEN 7, 10, and 36; PIGMENT BLUE 15, 15:1, 15:2, 15:3, 15:4, 15:5, 15:6, 22, 24, 29, 56, 60, 61, 62, and 64; and PIGMENT VIOLET 1, 15, 19, 23, 27, 29, 30, 32, 37, 40, and 50.

Examples of the above-described dye include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes and cyanine dyes, and a plurality of these dyes may be mixed and used in combination.

A fluorescent brightener is a compound which enhances the whiteness or blueness of a molded article by a fluorescent action of absorbing ultraviolet rays of solar light and artificial light, converting the absorbed ultraviolet rays into visible light of purple to blue, and radiating the visible light. Examples of the fluorescent brightener include C.I. Fluorescent Brightener 184, which is a benzoxazole-based compound; C.I. Fluorescent Brightener 52, which is a coumarin-based compound; and C.I. Fluorescent Brighteners 24, 85 and 71, which are diaminostilbene disulfonic acid-based compounds. When a fluorescent brightener is used, the amount thereof is adjusted to be preferably 0.00001 to 0.1 parts by mass, more preferably 0.00005 to 0.05 parts by mass, with respect to 100 parts by mass of the thermoplastic resin.

When other additive(s) is/are added in the additive composition of the present invention, the content of the component (A) is in a range of preferably 1 to 99.9% by mass, more preferably 50 to 99.8% by mass, with respect to the whole additive composition.

Next, the thermoplastic resin composition of the present invention will be described. The thermoplastic resin composition of the present invention contains: (A) cellulose nanofibers; (B) an alcohol compound having 4 to 60 carbon atoms (excluding a phenolic compound); and (C) a thermoplastic resin (hereinafter, also referred to as "component (C)"). The content of the (B) alcohol compound having 4 to 60 carbon atoms is 0.01 to 100 parts by mass with respect to 100

parts by mass of the (A) cellulose nanofibers, and the content of the (A) cellulose nanofibers is 0.5 to 150 parts by mass with respect to 100 parts by mass of the (C) thermoplastic resin. According to the thermoplastic resin composition of the present invention, coloring of a molded article can be inhibited under a high-temperature environment. It is noted here that the thermoplastic resin composition of the present invention is a concept that encompasses a masterbatch.

In the thermoplastic resin composition of the present invention, the component (A) and the component (B) may be as described above. The component (C) is, for example, a polymer selected from a polyolefin-based resin, a styrene-based resin, a polyester-based resin, a polyether-based resin, a polycarbonate-based resin, a polyamide-based resin, a polyvinyl alcohol, and a halogen-containing resin. In the thermoplastic resin composition of the present invention, the thermoplastic resin may be any one of, or a combination of these resins. Thereamong, a polyolefin-based resin is preferred.

Examples of the polyolefin-based resin that can be used include: $\alpha$-olefin polymers, such as low-density polyethylenes (LDPE), linear low-density polyethylenes (L-LDPE), high-density polyethylenes (HDPE), isotactic polypropylenes, syndiotactic polypropylenes, hemi-isotactic polypropylenes, cycloolefin polymers, stereo block polypropylenes, poly-3-methyl-1-butenes, poly-3-methyl-1-pentenes, and poly-4-methyl-1-pentenes; and $\alpha$-olefin copolymers, such as homopolypropylenes, ethylene-propylene block or random copolymers, impact copolymer polypropylenes, ethylene-methyl methacrylate copolymers, ethylene-methyl acrylate copolymers, ethylene-ethyl acrylate copolymers, ethylene-butyl acrylate copolymers, ethylene-vinyl acetate copolymers, and ethylene-vinyl alcohol resins (EVOH), and an elastomer composed of the polyolefin-based resin may be used as well.

When the polyolefin-based resin is a copolymer, the content of a polypropylene-derived structural unit with respect to all structural units in the copolymer is preferably not less than 70% by mass. In the thermoplastic resin composition of the present invention, two or more of such polyolefin-based resins may be blended, may form a block copolymer to be used as a block polymer-type resin, or may be alloyed. Further, the polyolefin-based resin may be a chlorination product of any of the above-described polyolefin-based resins.

The above-described polyolefin-based resins can be used regardless of, for example, the types and the presence or absence of a polymerization catalyst and a co-catalyst, the steric regularity, the average molecular weight, the molecular weight distribution, the presence or absence and the ratio of a component having a specific molecular weight, the specific gravity, the viscosity, the solubility in various solvents, the elongation rate, the impact strength, the crystallization degree, the X-ray diffraction, and the presence or absence of a modification/crosslinking treatment that is performed with an unsaturated carboxylic acid (e.g., maleic acid, itaconic acid, or fumaric acid), a derivative thereof (e.g., maleic anhydride, maleic acid monoester, or maleic acid diester) or an organic peroxide, or by irradiation with an energy ray, or a combination of these treatments.

Examples of the elastomer composed of the polyolefin-based resin include elastomers obtained by blending a polyolefin (e.g., polypropylene or polyethylene) as a hard segment and a rubber (e.g., ethylene-propylene rubber) as a soft segment, and elastomers obtained by dynamic cross-linking of these segments. The hard segment is, for example, at least one selected from polypropylene homopolymers, polypropylene block copolymers, polypropylene random copolymers and the like. The soft segment is, for example, an ethylene-propylene copolymer (EPM), an ethylene-propylene-diene copolymer (EPDM), an ethylene-vinyl acetate copolymer (EVA), or a vinyl acetate homopolymer.

Examples of the styrene-based resin include vinyl group-containing aromatic hydrocarbon homopolymers, and copolymers of a vinyl group-containing aromatic hydrocarbon and other monomer(s) (e.g., maleic anhydride, phenylmaleimide, (meth)acrylate, butadiene and/or (meth)acrylonitrile), for example, thermoplastic resins such as polystyrene (PS) resins, high-impact polystyrenes (HIPS), acrylonitrile-styrene (AS) resins, acrylonitrile-butadiene-styrene (ABS) resins, methyl methacrylate-butadiene-styrene (MBS) resins, heat-resistant ABS resins, acrylonitrile-styrene-acrylate (ASA) resins, acrylonitrile-acrylic rubber-styrene (AAS) resins, styrene-maleic anhydride (SMA) resins, methacrylate-styrene (MS) resins, styrene-isoprene-styrene (SIS) resins, acrylonitrile-ethylene propylene rubber-styrene (AES) resins, styrene-butadiene-butylene-styrene (SBBS) resins, and methyl methacrylate-acrylonitrile-butadiene-styrene (MABS) resins; and hydrogenated styrene-based elastomer resins obtained by hydrogenation of the double bond of butadiene or isoprene in any of the above-described resins, such as styrene-ethylene-butylene-styrene (SEBS) resins, styrene-ethylene-propylene-styrene (SEPS) resins, styrene-ethylene-propylene (SEP) resins, and styrene-ethylene-ethylene-propylene-styrene (SEEPS) resins.

Examples of the polyester-based resin include aromatic polyesters, such as polyalkylene terephthalates (e.g., polyethylene terephthalate, polybutylene terephthalate, and polycyclohexane dimethylene terephthalate) and polyalkylene naphthalates (e.g., polyethylene naphthalate and polybutylene naphthalate); linear polyesters, such as polytetramethylene terephthalate; and degradable aliphatic polyesters, such as polyhydroxy butyrate, polycaprolactone, polybutylene succinate, polyethylene succinate, polylactic acid, polymalic acid, polyglycolic acid, polydioxane, and poly(2-oxetanone).

Examples of the polyether-based resin include polyacetal, polyphenylene ether, polyether ketone, polyether ether ketone, polyether ketone ketone, polyether ether ketone ketone, polyether sulfone, and polyether imide.

Examples of the polycarbonate-based resin include polycarbonates, polycarbonate/ABS resins, polycarbonate/ASA resins, polycarbonate/AES resins, and branched polycarbonates.

Examples of the polyamide-based resin include polymers of ε-caprolactam (nylon 6), undecane lactam (nylon 11), lauryl lactam (nylon 12), aminocaproic acid, enantholactam, 7-aminoheptanoic acid, 11-aminoundecanoic acid, 9-aminononanoic acid, α-pyrrolidone, α-piperidone, and the like; copolymers obtained by copolymerization of a diamine (e.g., hexamethylenediamine, nonanediamine, nonanemethylenediamine, methylpentadiamine, undecanemethylenediamine, dodecanemethylenediamine, or *m*-xylenediamine) and a carboxylic acid compound (e.g., a dicarboxylic acid such as adipic acid, sebacic acid, terephthalic acid, isophthalic acid, dodecanedicarboxylic acid, or glutaric acid); and mixtures of these polymers and/or copolymers. Examples of the polyamide-based resin also include aramid resins, such as "KEVLAR" (trade name) manufactured by DuPont, "NOMEX" (trade name) manufactured by DuPont, and "TWARON" (trade name) and "CONEX" (trade name) which are manufactured by TEIJIN Ltd.

Examples of the polyvinyl alcohol include those produced by polymerizing a vinyl ester monomer and further saponifying the resultant. Examples of the vinyl ester monomer include: aliphatic vinyl esters, such as vinyl formate, vinyl acetate, vinyl propionate, vinyl valerate, vinyl butyrate, vinyl isobutyrate, vinyl pivalate, vinyl caprate, vinyl laurate, vinyl stearate, vinyl versatate, and vinyl trifluoroacetate; and aromatic vinyl esters such as vinyl benzoate. The vinyl ester monomer is, for example, an aliphatic vinyl ester having preferably 3 to 20 carbon atoms, more preferably 4 to 10 carbon atoms. Vinyl acetate is preferred from the economic standpoint. These vinyl ester monomers are usually used individually; however, two or more thereof may be used in combination as required. Further, a saponification product of a copolymer of a vinyl ester monomer and other unsaturated monomer may be used as well.

Examples of the other unsaturated monomer include: monomers having a vinyl group and an epoxy group, such as glycidyl (meth)acrylate, glycidyl (meth)allyl ether, 3,4-epoxycyclohexyl (meth) acrylate, and allyl glycidyl ether; monomers having two or more allyl groups, such as triallyloxyethylene, diallyl maleate, triallyl cyanurate, triallyl isocyanurate, tetraallyloxyethane, diallyl phthalate, triallyl cyanurate, and triallyl isocyanurate; allyl ester monomers, such as allyl acetate, vinyl acetoacetate, allyl acetoacetate, and allyl diacetoacetate; acetoacetoxyalkyl (meth)acrylates, such as acetoacetoxyethyl (meth)acrylate and acetoacetoxypropyl (meth)acrylate; acetoacetoxyalkyl crotonates, such as acetoacetoxyethyl crotonate and acetoacetoxypropyl crotonate; 2-cyanoacetoacetoxyethyl (meth)acrylate; divinyl benzene; alkylene glycol (meth)acrylates, such as ethylene glycol di(meth)acrylate, 1,2-propylene glycol di(meth)acrylate, 1,3-propylene glycol di(meth)acrylate, 1,4-butanediol di(meth)acrylate, 1,6-hexanediol di(meth)acrylate, and neopentyl glycol di(meth)acrylate; trimethylolpropane tri(meth)acrylate; allyl (meth)acrylate; hydroxyalkyl (meth)acrylates (wherein, the alkyl moiety is a C1 to C10 alkyl group, preferably a C1 to C6 alkyl group), such as 2-hydroxyethyl (meth)acrylate, hydroxypropyl (meth)acrylate, and 4-hydroxybutyl (meth)acrylate; nitrile monomers, such as (meth)acrylonitrile; styrene monomers, such as styrene and α-methylstyrene; olefins, such as ethylene, propylene, 1-butene, and isobutene; halogenated olefins, such as vinyl chloride, vinylidene chloride, vinyl fluoride, and vinylidene fluoride; olefin monomers, such as ethylene sulfonic acid; diene monomers, such as 1,3-butadiene, 2-methyl-1,3-butadiene, 2,3-dimethyl-1,3-butadiene, 2-methyl-1,3-pentadiene, and 2-chloro-1,3-butadiene; hydroxy group-containing α-olefins, such as 3-buten-1-ol, 4-penten-1-ol, 5-hexen-1-ol, 2-diol and glycerol monoallyl ether, and derivatives thereof such as acylation products; hydroxymethyl vinylidene diacetates, such as 1,3-diacetoxy-2-methylene propane, 1,3-dipropionyloxy-2-methylene propane, and 1,3-dibutylonyloxy-2-methylene propane; unsaturated acids, such as itaconic acid, maleic acid and acrylic acid, as well as salts and mono- or di-alkyl esters of these unsaturated acids; nitriles, such as acrylonitrile; amides, such as methacrylamide and diacetone acrylamide; olefin sulfonic acids, such as ethylene sulfonic acid, allyl sulfonic acid, methallyl sulfonic acid and 2-acrylamide-2-methylpropane sulfonic acid, and salts of these olefin sulfonic acids; vinylalkyldialkoxysilanes, such as vinyltriethoxysilane, vinyltrimethoxysilane, vinyltripropoxysilane, vinyltributoxysilane, vinylmethyldimethoxysilane, and vinylmethyldiethoxysilane; γ-(meth)acryloxypropyltrialkoxysilanes, such as γ-(meth)acryloxypropyltrimethoxysilane and γ-(meth)acryloxypropyltriethoxysilane; γ-(meth)acryloxypropylalkyldialkoxysilanes, such as γ-(meth)acryloxypropylmethyldimethoxysilane and γ-(meth)acryloxypropylmethyldiethoxysilane; vinyl-tris(β-methoxyethoxy)silane; and hydroxymethyl vinylidene diacetates. Specific examples of the hydroxymethyl vinylidene diacetates include compounds having a diol of 1,3-diacetoxy-2-methylenepropane, 1,3-dipropionyloxy-2-methylenepropane, 1,3-dibutyronyloxy-2-methylenepropane, 3,4-dihydroxy-1-butene,3,4-diacyloxy-1-butene,3-acyloxy-4-hydroxy-1-butene, 4-acyloxy-3-hydroxy-1-butene, 3,4-diacyloxy-2-methyl-1-butene, 4,5-dihydroxy-1-pentene, 4,5-diacyloxy-1-pentene, 4,5-dihydroxy-3-methyl-1-pentene, 4,5-diacyloxy-3-methyl-1-pentene, 5,6-dihydroxy-1-hexene, 5,6-diacyloxy-1-hexene, glycerin monoallyl ether, 2,3-diacetoxy-1-allyloxypropane, 2-acetoxy-1-allyloxy-3-hydroxypropane, 3-acetoxy-1-allyloxy-2-hydroxypropane, glycerin monovinyl ether, glycerin monoisopropenyl ether, vinylethylene carbonate, 2,2-dimethyl-4-vinyl-1,3-dioxolane or the like. These compounds may be used individually, or two or more thereof may be used in combination.

Examples of the halogen-containing resin include: chlorine-containing resins, such as polyvinyl chlorides, polyvinylidene chlorides, chlorinated polyethylenes, chlorinated polypropylenes, polyvinylidene fluorides, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate ternary copolymers, vinyl chloride-acrylate copolymers, vinyl chloride-maleate copolymers, and vinyl chloride-cyclohexylmaleimide copolymers; and fluorine-containing resins, such

as ethylene-tetrafluoroethylene copolymers.

Further, examples of other polymers include thermoplastic resins, such as petroleum resins, coumarone resins, polyvinyl acetates, acrylic resins, polymethyl methacrylates, polyvinyl alcohols, polyvinyl formals, polyvinyl butyrals, polyphenylene sulfides, polyurethanes, cellulose-based resins, polyimide resins, polysulfones and liquid crystal polymers, and blends of these resins.

In the resin composition of the present invention, the content of the component (B) is 0.01 to 100 parts by mass, preferably 0.1 to 100 parts by mass, more preferably 0.5 to 80 parts by mass, with respect to 100 parts by mass of the component (A). Further, in the resin composition of the present invention, the content of the component (A) is 0.5 to 150 parts by mass, preferably 1 to 100 parts by mass, more preferably 5 to 80 parts by mass, with respect to 100 parts by mass of the component (C).

A method of incorporating the components (A) and (B) into the component (C) is not particularly restricted, and a method of blending a powder or pellet of a thermoplastic resin with the components (A) and (B) and subsequently molding the resulting mixture by a well-known and commonly-used processing method using a well-known and commonly-used processing equipment may be employed. For example, it is preferred to blend the component (C) with the components (A) and (B) in advance and subsequently melt-kneading the resultant using an extruder. In addition to the above, the resin composition of the present invention can also be produced by blending the additive composition of the present invention such that the (A) cellulose nanofibers is incorporated in an amount of 0.5 to 150 parts by mass with respect to 100 parts by mass of the (C) thermoplastic resin, and subsequently melt-kneading the resultant using an extruder. A blending method is not particularly restricted, and two or more selected from the components (C), (A) and (B) and other additives may be blended first and the rest may then be added and blended, or all of these components and additives may be blended altogether. An equipment to be used for the blending is not particularly restricted; however, it is preferred to perform the blending using a blending equipment such as a Henschel mixer, a tumbler mixer, or a rocking mill.

The resin composition of the present invention may also contain a rubber component. Examples of the rubber component include natural rubbers, polybutadienes, polyisoprenes, polyisobutylene, neoprene, polysulfide rubbers, Thiokol rubbers, acrylic rubbers, urethane rubbers, silicone rubbers, epichlorohydrin rubbers, styrene-butadiene block copolymers (SBR), hydrogenated styrene-butadiene block copolymers (SEB), styrene-butadiene-styrene block copolymers (SBS), hydrogenated styrene-butadiene-styrene block copolymers (SEBS), styrene-isoprene block copolymers (SIR), hydrogenated styrene-isoprene block copolymers (SEP), styrene-isoprene-styrene block copolymers (SIS), hydrogenated styrene-isoprene-styrene block copolymers (SEPS), styrene-butadiene random copolymers, hydrogenated styrene-butadiene random copolymers, styrene-ethylene-propylene random copolymers, styrene-ethylene-butylene random copolymers, ethylene-propylene copolymers (EPR), ethylene-(1-butene) copolymers, ethylene-(1-hexene) copolymers, ethylene-(1-octene) copolymers, ethylene-propylene-diene copolymers (EPDM), and core-shell-type rubbers, for example, butadiene-acrylonitrile-styrene core-shell rubbers (ABS), methyl methacrylate-butadiene-styrene core-shell rubbers (MBS), methyl methacrylate-butyl acrylate-styrene core-shell rubbers (MAS), octyl acrylate-butadiene-styrene core-shell rubbers (MABS), alkyl acrylate-butadiene-acrylonitrile-styrene core-shell rubbers (AABS), butadiene-styrene core-shell rubbers (SBR), and siloxane-containing core-shell rubbers such as methyl methacrylate-butyl acrylate siloxane.

In the resin composition of the present invention, the content ratio of the rubber component is not particularly restricted; however, it is preferably 30 parts by mass or less, more preferably 10 parts by mass or less, with respect to a total of 100 parts by mass of the thermoplastic resin and the rubber component. From the standpoint of maintaining the dimensional stability and the physical properties, it is preferred that the resin composition of the present invention contain no rubber component.

The resin composition of the present invention may contain other additive(s) within a range that does not impair the effects of the present invention. Examples of the other additives include the same ones as those exemplified above. In the thermoplastic resin composition of the present invention, such other additives can be used with no particular restriction in terms of the amount to be incorporated; however, the additive composition of the present invention and the other additives are preferably incorporated such that they each exist at an appropriate concentration in the thermoplastic resin.

Next, the molded article of the present invention will be described. The molded article of the present invention is obtained by molding the thermoplastic resin composition of the present invention, and coloring of the molded article under a high-temperature environment is inhibited. As a method of molding the thermoplastic resin composition of the present invention, any known molding method can be employed, and examples thereof include injection molding, extrusion molding, blow molding, vacuum molding, inflation molding, calender molding, slush molding, dip molding, and foam molding.

Examples of the use of the molded article of the present invention include: interior materials, exterior materials, and structural materials of transport equipment, such as automobiles, trains, ships, and airplanes; housings, structural materials, and inner parts of electrical appliances, such as personal computers, televisions, telephones, and clocks; housings, structural materials, and inner parts of mobile communication devices such as cellular phones; housings,

structural materials, and inner parts of portable music players, video playback equipment, printing devices, copy machines, and sporting goods; architectural materials; office supplies such as stationery; receptacles; and containers.

Examples of particularly preferred use of the molded article of the present invention include: automotive interior members, such as instrument panels, door trim panels, pillar trims, door trims, pillar garnishes, package trays, rear trays, console boxes, and air-conditioning ducts; automotive exterior members, such as bumpers, radiator grilles, front grilles, front panels, fenders, pillars, pillar covers, door mirror stay covers, glass run channels, door mirror housings, lamp housings, wheel covers, spoilers, air spoilers, weather-strips, window moldings, belt moldings, sunroofs, front-end modules, door modules, back door modules, and outer plates; home appliance housings, such as television housings, personal computer housings, audio device housings, refrigerator housings, washing machine housings, air conditioner housings, gaming device housings, and cellular phone housings; building members, such as doors, inner wall materials, external wall materials, ceiling materials, roof materials, tiles, and heat-insulating/shielding materials; and structural materials of sporting goods, such as tennis rackets, golf clubs, golf balls, and insoles, midsoles and outsoles of athletic shoes.

Next, a method of stabilizing a thermoplastic resin composition using the additive composition of the present invention (hereinafter, also referred to as "stabilization method") will be described. The stabilization method of the present invention is a method of improving the thermostabilization effect of a thermoplastic resin composition containing cellulose nanofibers, which method includes adding the component (B) to a thermoplastic resin composition containing 0.5 to 150 parts by mass of the component (A), in an amount of 0.01 to 100 parts by mass with respect to 100 parts by mass of the component (C). It is noted here that, in the stabilization method of the present invention, the component (B) does not encompass a phenolic compound.

In the stabilization method of the present invention, examples of the components (C), (A) and (B) include the same ones as those exemplified above for the additive composition and the thermoplastic resin composition of the present invention.

In the stabilization method of the present invention, it is preferred to blend the component (C) with the components (A) and (B) in advance and subsequently melt-kneading the resultant using an extruder. A blending method is not particularly restricted, and two or more selected from the components (C), (A) and (B) and other additives may be blended first and the rest may then be added and blended, or all of these components and additives may be blended altogether. An equipment to be used for the blending is not particularly restricted; however, it is preferred to perform the blending using a blending equipment such as a Henschel mixer, a tumbler mixer, or a rocking mill.

## EXAMPLES

The present invention will now be described more concretely by way of Examples thereof; however, the present invention is not restricted to Examples and the like below by any means.

<Examples 1-1 to 1-15 and Comparative Examples 1-1 to 1-14>

To a polypropylene masterbatch containing 40% by mass of (A) cellulose nanofibers (CNF-mixed PP masterbatch, manufactured by Green Science Alliance Co., Ltd.), (B) an alcohol compound having 4 to 60 carbon atoms and other additives were added in accordance with the respective amounts shown in Tables 1 and 2 with respect to 10 parts by mass of the cellulose nanofibers, and the resultants were each blended to prepare additive compositions 1 to 29.

[Table 1]

| | (B) alcohol compound | Other additives |
|---|---|---|
| Additive composition 1 | 3.5 parts by mass of dipentaerythritol | none |
| Additive composition 2 | 3.5 parts by mass of dipentaerythritol | 0.1 parts by mass of AO-60, 0.1 parts by mass of 2112 |
| Additive composition 3 | 0.01 parts by mass of dipentaerythritol | 0.1 parts by mass of AO-60, 0.1 parts by mass of 2112 |
| Additive composition 4 | 0.1 parts by mass of dipentaerythritol | 0.1 parts by mass of AO-60, 0.1 parts by mass of 2112 |
| Additive composition 5 | 0.5 parts by mass of dipentaerythritol | 0.1 parts by mass of AO-60, 0.1 parts by mass of 2112 |

(continued)

| | (B) alcohol compound | Other additives |
|---|---|---|
| Additive composition 6 | 1 part by mass of dipentaerythritol | 0.1 parts by mass of AO-60, 0.1 parts by mass of 2112 |
| Additive composition 7 | 5 parts by mass of dipentaerythritol | 0.1 parts by mass of AO-60, 0.1 parts by mass of 2112 |
| Additive composition 8 | 10 parts by mass of dipentaerythritol | 0.1 parts by mass of AO-60, 0.1 parts by mass of 2112 |
| Additive composition 9 | 3.5 parts by mass of dipentaerythritol | 0.1 parts by mass of AO-60, 0.1 parts by mass of HP-10 |
| Additive composition 10 | 0.7 parts by mass of sorbitol | 0.1 parts by mass of AO-80, 0.1 parts by mass of HP-10 |
| Additive composition 11 | 0.8 parts by mass of pentaerythritol | 0.1 parts by mass of AO-60, 0.1 parts by mass of 2112 |
| Additive composition 12 | 6.4 parts by mass of stearyl alcohol | 0.1 parts by mass of AO-60, 0.1 parts by mass of 2112 |
| Additive composition 13 | 2.4 parts by mass of 1,2-dodecanediol | 0.1 parts by mass of AO-60, 0.1 parts by mass of 2112 |
| Additive composition 14 | 2.1 parts by mass of tris(2-hydroxyethyl) isocyanurate | 0.1 parts by mass of AO-60, 0.1 parts by mass of 2112 |
| Additive composition 15 | 1.5 parts by mass of ditrimethylolpropane | 0.1 parts by mass of AO-60, 0.1 parts by mass of 2112 |

[Table 2]

| | (B) alcohol compound | Other additives |
|---|---|---|
| Additive composition 16 | none | none |
| Additive composition 17 | none | 0.1 parts by mass of 2112 |
| Additive composition 18 | none | 0.1 parts by mass of AO-20, 0.1 parts by mass of 2112 |
| Additive composition 19 | none | 0.1 parts by mass of AO-30, 0.1 parts by mass of 2112 |
| Additive composition 20 | none | 0.1 parts by mass of AO-40, 0.1 parts by mass of 2112 |
| Additive composition 21 | none | 0.1 parts by mass of AO-50, 0.1 parts by mass of 2112 |
| Additive composition 22 | none | 0.1 parts by mass of AO-60, 0.1 parts by mass of 2112 |
| Additive composition 23 | none | 0.1 parts by mass of AO-80, 0.1 parts by mass of 2112 |
| Additive composition 24 | none | 0.1 parts by mass of AO-330, 0.1 parts by mass of 2112 |
| Additive composition 25 | none | 0.1 parts by mass of IRGANOX 1098, 0.1 parts by mass of 2112 |

(continued)

| | (B) alcohol compound | Other additives |
|---|---|---|
| Additive composition 26 | none | 0.1 parts by mass of AO-60, 0.1 parts by mass of HP-10 |
| Additive composition 27 | none | 0.1 parts by mass of AO-60, 0.1 parts by mass of PEP-36 |
| Additive composition 28 | none | 0.1 parts by mass of AO-60, 0.3 parts by mass of AO-412S |
| Additive composition 29 | 2.5 parts by mass of glycerol | 0.1 parts by mass of AO-60, 0.1 parts by mass of 2112 |

AO-60: phenolic antioxidant, trade name "ADK STAB AO-60" manufactured by ADEKA Corporation
AO-80: phenolic antioxidant, trade name "ADK STAB AO-80" manufactured by ADEKA Corporation
AO-20: phenolic antioxidant, trade name "ADK STAB AO-20" manufactured by ADEKA Corporation
AO-30: phenolic antioxidant, trade name "ADK STAB AO-30" manufactured by ADEKA Corporation
AO-40: phenolic antioxidant, trade name "ADK STAB AO-40" manufactured by ADEKA Corporation
AO-50: phenolic antioxidant, trade name "ADK STAB AO-50" manufactured by ADEKA Corporation
AO-330: phenolic antioxidant, trade name "ADK STAB AO-330" manufactured by ADEKA Corporation
IRGANOX 1098: phenolic antioxidant, trade name "IRGANOX 1098" manufactured by BASF Ltd.
2112: phosphorus-based antioxidant, trade name "ADK STAB 2112" manufactured by ADEKA Corporation
HP-10: phosphorus-based antioxidant, trade name "ADK STAB HP-10" manufactured by ADEKA Corporation
PEP-36: phosphite-based antioxidant, trade name "ADK STAB PEP-36" manufactured by ADEKA Corporation
AO-412S: sulfur-based antioxidant, trade name "ADK STAB AO-412S" manufactured by ADEKA Corporation
Each additive composition shown in Table 3 was added to 100 parts by mass of a homopolypropylene (melt flow rate: 8 g/10 min; 2.16 kg × 230°C according to ISO Standard 1133) as a thermoplastic resin such that the amount of cellulose nanofibers was 10 parts by mass, and these materials were blended, after which the resultant was melt-kneaded and granulated using an extruder (LABO-PLASTOMILL μ, manufactured by Toyo Seiki Seisaku-sho, Ltd.) at a melt temperature of 230°C and a screw speed of 50 rpm, whereby a pellet was obtained. The thus obtained pellet was dried at 60°C for 8 hours and then used for evaluation.

<Measurement of Y.I. and ΔY.I.>

The thus obtained pellet was injection-molded using an injection molding machine (EC100-2A; manufactured by Toshiba Machine Co., Ltd.) at a mold temperature of 40°C and a resin temperature of 230°C to prepare a test piece having dimensions of 10 mm × 10 mm × 2 mm. After leaving the thus obtained test piece in an incubator at 23°C for 48 hours, the test piece was placed in a 120°C gear oven, and the yellowness index (Y.I.) of the test piece was measured with time. The Y.I. was measured by a reflection method using "Spectrophotometer SD3000" manufactured by Nippon Denshoku Industries Co., Ltd. In Table 3 below, ΔY.I. was evaluated as a difference between the Y.I. of each test piece before being placed in the gear oven and the Y.I. of the test piece measured with time. The results thereof are shown together in Table 3 below.

[Table 3]

| | Additive composition | Y.I. | ΔY.I. | |
|---|---|---|---|---|
| | | 0 hours | 96 hours | 384 hours |
| Example 1-1 | Additive composition 1 | 43.4 | 7.6 | 18.3 |
| Example 1-2 | Additive composition 2 | 49.9 | 7.0 | 10.7 |
| Example 1-3 | Additive composition 3 | 45.9 | 8.6 | 12.3 |
| Example 1-4 | Additive composition 4 | 46.7 | 8.1 | 11.9 |
| Example 1-5 | Additive composition 5 | 45.2 | 7.7 | 10.1 |
| Example 1-6 | Additive composition 6 | 45.6 | 7.5 | 10.7 |

(continued)

| | Additive composition | Y.I. | ΔY.I. | |
|---|---|---|---|---|
| | | 0 hours | 96 hours | 384 hours |
| Example 1-7 | Additive composition 7 | 46.3 | 6.6 | 10.4 |
| Example 1-8 | Additive composition 8 | 43.5 | 6.0 | 10.1 |
| Example 1-9 | Additive composition 9 | 47.2 | 6.5 | 10.0 |
| Example 1-10 | Additive composition 10 | 53.5 | 10.0 | 16.6 |
| Example 1-11 | Additive composition 11 | 46.1 | 7.4 | 11.0 |
| Example 1-12 | Additive composition 12 | 51.2 | 8.8 | 10.5 |
| Example 1-13 | Additive composition 13 | 44.6 | 8.7 | 10.9 |
| Example 1-14 | Additive composition 14 | 48.0 | 7.2 | 10.2 |
| Example 1-15 | Additive composition 15 | 48.5 | 7.4 | 10.0 |
| Comparative Example 1-1 | Additive composition 16 | 49.4 | 13.8 | 54.0 |
| Comparative Example 1-2 | Additive composition 17 | 49.0 | 14.4 | 25.5 |
| Comparative Example 1-3 | Additive composition 18 | 50.0 | 13.1 | 23.4 |
| Comparative Example 1-4 | Additive composition 19 | 51.3 | 13.3 | 24.5 |
| Comparative Example 1-5 | Additive composition 20 | 50.6 | 14.1 | 24.5 |
| Comparative Example 1-6 | Additive composition 21 | 48.6 | 13.6 | 23.8 |
| Comparative Example 1-7 | Additive composition 22 | 51.9 | 13.3 | 23.6 |
| Comparative Example 1-8 | Additive composition 23 | 47.5 | 13.6 | 23.9 |
| Comparative Example 1-9 | Additive composition 24 | 51.5 | 14.3 | 25.0 |
| Comparative Example 1-10 | Additive composition 25 | 50.7 | 17.7 | 33.4 |
| Comparative Example 1-11 | Additive composition 26 | 47.4 | 12.8 | 23.3 |
| Comparative Example 1-12 | Additive composition 27 | 49.9 | 12.4 | 27.2 |
| Comparative Example 1-13 | Additive composition 28 | 51.2 | 13.0 | 23.0 |
| Comparative Example 1-14 | Additive composition 29 | 50.6 | 13.7 | 19.5 |

<Preparation of Masterbatch>

[Example 2-1]

To 100 parts by mass of a homopolypropylene (melt flow rate: 8 g/10 min; 2.16 kg × 230°C according to ISO Standard 1133), 70 parts by mass of cellulose nanofibers, 0.2 parts by mass of ADK STAB 2112 (manufactured by ADEKA Corporation) as a phosphorus-based antioxidant, and 25 parts by mass of dipentaerythritol as an alcohol compound were mixed, and the resultant was melt-kneaded and granulated using an extruder (LABO-PLASTOMILL μ, manufactured by Toyo Seiki Seisaku-sho, Ltd.) at a melt temperature of 230°C and a screw speed of 50 rpm, whereby a masterbatch was produced. The thus obtained masterbatch had a favorable external appearance and was stably produced.

[Example 2-2]

A masterbatch was produced in the same manner as in Example 2-1, except that the alcohol compound was changed from dipentaerythritol to sorbitol. The thus obtained masterbatch had a favorable external appearance and was stably produced.

[Example 2-3]

A masterbatch was produced in the same manner as in Example 2-1, except that the alcohol compound was changed from dipentaerythritol to spiroglycol. The thus obtained masterbatch had a favorable external appearance and was stably produced.

From the above, it was confirmed that the thermoplastic resin composition of the present invention can sufficiently inhibit coloring of a molded article under a high-temperature environment.

## Claims

1. An additive composition, comprising:

    (A) cellulose nanofibers; and
    (B) an alcohol compound having 4 to 60 carbon atoms (excluding a phenolic compound),

    wherein the content of the (B) alcohol compound having 4 to 60 carbon atoms is 0.01 to 100 parts by mass with respect to 100 parts by mass of the (A) cellulose nanofibers.

2. The additive composition according to claim 1, wherein the (B) alcohol compound having 4 to 60 carbon atoms is at least one selected from the group consisting of linear or branched monohydric alcohols having 10 to 30 carbon atoms, linear or branched polyhydric alcohols having 10 to 30 carbon atoms, cyclic acetal-containing diols, tris(2-hydroxyalkyl)isocyanurates, and alcohols represented by the following Formula (1) or (2):

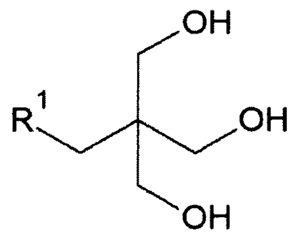

(1)

(wherein, $R^1$ represents a hydrogen atom, a hydroxy group, or a linear or branched alkyl group having 1 to 6 carbon atoms)

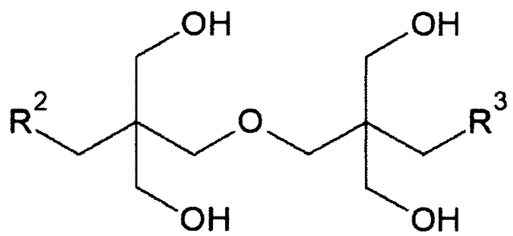

(2)

(wherein, $R^2$ and $R^3$ each independently represent a hydrogen atom, a hydroxy group, or a linear or branched alkyl group having 1 to 6 carbon atoms).

3. The additive composition according to claim 1 or 2, further comprising an antioxidant.

4. The additive composition according to claim 3, wherein the antioxidant is at least one selected from the group consisting of phenolic antioxidants and phosphorus-based antioxidants.

5. A thermoplastic resin composition, comprising:

    (A) cellulose nanofibers;
    (B) an alcohol compound having 4 to 60 carbon atoms (excluding a phenolic compound); and
    (C) a thermoplastic resin,

wherein

the content of the (B) alcohol compound having 4 to 60 carbon atoms is 0.01 to 100 parts by mass with respect to 100 parts by mass of the (A) cellulose nanofibers, and
the content of the (A) cellulose nanofibers is 0.5 to 150 parts by mass with respect to 100 parts by mass of the (C) thermoplastic resin.

**6.** A molded article, comprising the thermoplastic resin composition according to claim 5.

**7.** The molded article according to claim 6, wherein the molded article is an automotive interior member, an automotive exterior member, a home appliance housing, a building member, or a structural material for sporting goods.

**INTERNATIONAL SEARCH REPORT**

International application No. PCT/JP2020/000735

A. CLASSIFICATION OF SUBJECT MATTER
Int. Cl. C08L1/00(2006.01)i, C08J3/22(2006.01)i, C08K5/05(2006.01)i, C08K5/13(2006.01)i, C08K5/49(2006.01)i, C08K7/02(2006.01)i, C08L101/00(2006.01)i
FI: C08L1/00, C08K5/05, C08L101/00, C08J3/22, C08K7/02, C08K5/13, C08K5/49

According to International Patent Classification (IPC) or to both national classification and IPC

B. FIELDS SEARCHED

Minimum documentation searched (classification system followed by classification symbols)
Int. Cl. C08L1/00, C08J3/22, C08K5/05, C08K5/13, C08K5/49, C08K7/02, C08L101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 2018-154699 A (DAIO PAPER CORP.) 04 October 2018, claims 1-2, paragraph [0060], example 8 | 1-4 |
| X | JP 6422540 B1 (ASAHI KASEI CORP.) 14 November 2018, claim 1, paragraphs [0001], [0010], [0039], [0040], [0083]-[0085] | 1-7 |
| E, X | JP 2020-007496 A (ASAHI KASEI CORP.) 16 January 2020, claims 1, 9, paragraphs [0099], [0102], [0110] | 1-7 |
| A | JP 2018-145571 A (KAO CORP.) 20 September 2018 | 1-7 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03.03.2020 | 17.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/000735

| Patent Documents referred to in the Report | Publication Date | Patent Family | Publication Date |
|---|---|---|---|
| JP 2018-154699 A | 04.10.2018 | WO 2018/168393 A1<br>CN 110268007 A<br>KR 10-2019-0126308 A | |
| JP 6422540 B1 | 14.11.2018 | (Family: none) | |
| JP 2020-007496 A | 16.01.2020 | (Family: none) | |
| JP 2018-145571 A | 20.09.2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6360954 B
- JP 5929916 B
- JP 2015196790 A
- JP S462280 B
- JP S5030039 B
- JP S5129129 B
- JP H0336839 B
- JP S61174270 A
- JP H05179052 A
- JP 2010132927 A
- JP H0710989 A
- US 6552131 B1
- JP 2016023254 A